# EUROPÄISCHE PATENTSCHRIFT

(11) **EP 2 108 530 B1**
(45) Veröffentlichungstag und Bekanntmachung des Hinweises auf die Patenterteilung: **02.11.2011**
(21) Anmeldenummer: 09154375.1
(22) Anmeldetag: 05.03.2009
(51) Int. Cl.: B60C 11/00

(54) **Fahrzeugluftreifen**
Pneumatic tyres for a vehicle
Pneus de véhicule

(30) Priorität: 11.04.2008 DE 102008018339
(43) Veröffentlichungstag der Anmeldung: 14.10.2009
(73) Patentinhaber: Continental Reifen Deutschland GmbH, 30165 Hannover (DE)
(72) Erfinder: Weber, Christian, Dr., 30826 Garbsen (DE); Kramer, Thomas, Dr., 31832 Springe (DE); Carl, Wilfried, Dr., 12159 Berlin (DE); Haufe, Matthias, Dr., 31535 Neustadt (DE)
(74) Vertreter: Finger, Karsten

(56) Entgegenhaltungen:
- EP-A- 0 105 822
- EP-A- 0 538 723
- EP-A- 0 715 974
- EP-A- 1 897 702
- US-A- 4 396 052

## Beschreibung

Die Erfindung betrifft einen Fahrzeugluftreifen für Nutzfahrzeuge mit einer Radialkarkasse, einem mehrlagigen Gürtel und einem Laufstreifen aus einem Laufstreifenunterteil und einem profilierten Laufstreifenoberteil, welcher aus mehreren in radialer Richtung aufeinander angeordneten Schichten aus unterschiedlichen Gummizusammensetzungen besteht, welche Schichten im Laufstreifenoberteil sich in ihrer Rückprallelastizität voneinander unterscheiden, wobei die radial äußerste Schicht die geringste Rückprallelastizität aufweist und die Rückprallelastizität in der bzw. den darunter befindlichen Schicht(en) in Richtung Reifeninneres größer ist beziehungsweise sukzessive größer wird.

Ein Fahrzeugluftreifen mit einem derart geschichteten Laufstreifen ist aus der EP-A-105 822 bekannt. Der Laufstreifen ist in radialer Richtung aus drei bis zehn Schichten aufgebaut, wobei die radial äußerste Schicht aus einer Gummizusammensetzung besteht, deren Rückprallelastizität gemäß ASTM D1054 zwischen 64 % und 74 % beträgt und deren radial innerste Schicht aus einer Gummizusammensetzung besteht, deren Rückprallelastizität zwischen 82 % und 96 % (gemäß ASTM D1054) beträgt. Die radial inneren Schichten sollen dadurch eine höhere Hitzebeständigkeit und die radial äußeren Schichten eine verbesserte Reißfestigkeit aufweisen.

Fahrzeugluftreifen mit Cap/Base-Ausführungen des Laufstreifens sind in unterschiedlichen Ausführungsvarianten bekannt. So ist beispielsweise aus der EP-A-1 308 319 ein in Radialbauart ausgeführter Fahrzeugluftreifen, insbesondere für Personenkraftwagen, bekannt, dessen Laufstreifen einen Laufstreifenunterteil und einen Laufstreifenoberteil aufweist, welcher mindestens zwei sich in ihrer Mischungszusammensetzung unterscheidende Abschnitte aufweist. Der die Außenschulter des Laufstreifens umfassende Abschnitt des Laufstreifenoberteils besteht aus einer Mischung mit einer höheren Glasübergangstemperatur als der die Innenschulter umfassende Abschnitt des Laufstreifenoberteils. Ein Reifen mit einem derartig aufgebauten Laufstreifen soll sowohl bezüglich seiner Winterperformance als auch bezüglich seiner Nässeperformance verbessert sein.

Aus der EP-B-0 864 447 ist ein Fahrzeugluftreifen bekannt, welcher einen Laufstreifen aufweist, der ebenfalls in zumindest zwei in Unfangsrichtung umlaufende Abschnitte geteilt ist, die aus unterschiedlichen Gummizusammensetzungen bestehen. Der eine Abschnitt enthält einen verstärkenden Füllstoff mit mindestens 40% Ruß, der zweite Abschnitt enthält einen Anteil an weißem Füllstoff, und zwar zumindest 20% der Gesamtmenge des verwendeten verstärkenden Füllstoffs. Die Differenz zwischen den Hysteresewerten bei 70°C der beiden Abschnitte entspricht mindestens 10% des höheren Wertes.

Die DE-A-100 14 892 offenbart einen Fahrzeugluftreifen, insbesondere einen Winterreifen für Personenkraftwagen, mit einem profilierten Laufstreifen, welcher sich in radialer Richtung aus mehreren Schichten aus zwei Laufstreifenmischungen mit unterschiedlichem Abriebswiderstand zusammensetzt. Die sehr dünn ausgeführten Schichten weisen eine Schichtdicke von weniger als 1 mm auf und sind lamellenartig nebeneinander und alternierend angeordnet sowie miteinander vulkanisiert, wobei die Grenzflächen der Schichten im Wesentlichen der Profilkontur folgen. Dadurch soll ein Fahrzeugluftreifen zur Verfuegung gestellt werden, dessen Wintereigenschaften mit abnehmender Profiltiefe weniger stark beeinträchtigt werden als bei bekannten Fahrzeugluftreifen.

Es ist allgemein bekannt, dass die Anfälligkeit eines Fahrzeugluftreifens gegenüber unregelmäßigem Abrieb in Zusammenhang mit der verwendeten Laufstreifenmischung steht und durch diese stark beeinflusst wird. Zu unregelmäßigem Abrieb neigen vor allem Laufstreifen von Reifen, insbesondere Nutzfahrzeugreifen, die in Langstreckeneinsätzen verwendet werden. Diese Einsätze zeichnen sich durch Strecken mit einer geringen Anzahl von Kurven und mit einem hohen Anteil an Geradeausfahrt aus. Für solche Einsätze ist es erwünscht, möglichst Treibstoff sparende Reifen einzusetzen, um den Kraftstoffverbrauch zu reduzieren. Die Laufstrezfenznischungen sollten daher eine geringe Dämpfung bzw. eine hohe Rückprallelastizität aufweisen. Daraus resultiert ein Zielkonflikt zwischen einer Verbesserung der Beständigkeit gegen unregelmäßigen Abrieb, welche durch eine geringere Rückprallelastizität der Laufstreifenmischung erzielbar ist, und dem Rollwiderstand, welcher eine höhere Rückprallelastizität der Laufstreifenmischung erfordert. Im Neuzustand des Reifens ist durch die höhere Profilverformung die Anfälligkeit des Laufstreifens für unregelmäßigen Abrieb ferner größer als mit abnehmender Profiltiefe.

Der Erfindung liegt die Aufgabe zugrunde, eine Lösung für diesen Zielkonflikt aufzufinden.

Gelöst wird die gestellte Aufgabe erfindungsgemäß dadurch, dass die radial äußerste Schicht aus einer Gummizusammensetzung besteht oder eine solche aufweist, welche eine Rückprallelastizität (gemäß DIN 53512, bei 70° C) von 40% bis 60% und die radial innerste Schicht aus einer Gummizusammensetzung besteht oder eine solche aufweist, welche eine Rückprallelastizität (gemäß DIN 53512, bis 70°C) von 50% bis 70% aufweist.

Bei erfindungsgemäß ausgeführten Reifen nimmt daher grundsätzlich während des Abriebes die Beständigkeit des Laufstreifens gegenüber unregelmäßigem Abrieb ab. Mit zunehmendem Abrieb und der sich dabei verringernden Profiltiefe reduziert sich jedoch auch die Anfälligkeit des Profils bzw. des Laufstreifens gegenüber unregelmäßigem Abrieb. Diese beiden Effekte können sich daher zumindest im Wesentlichen ausgleichen. Ein Reifen gemäß der Erfindung hat gegenüber Reifen, deren Laufstreifenoberteil aus einer hoch dämpfenden Mischung besteht, den Vorteil, dass sein Rollwiderstand deutlich geringer ist, ohne dass sich die Anfälligkeit des Laufstreifens, unregelmäßig abzureiben, erhöht. Im Neuzustand soll der Reifen gegenüber unregelmäßigem Abrieb möglichst wenig anfällig sein. Die radial äußerste Schicht besteht daher aus einer Gummizusammensetzung oder weist eine solche auf, deren Rückprallelastizität (gemäß DIN 53512, bei 70°C) zwischen 40% und 60% beträgt. Die radial innerste Schicht besteht gemäß der Erfindung aus einer Gummizusammensetzung bzw. weist eine Gummizusammensetzung auf, welche eine Rückprallelastizität (gemäß DIN 53512, bei 70°C) von 50% bis 70% aufweist. Die gegebenenfalls zwischen der radial äußersten und der radial innersten Schicht befindlichen weiteren Schichten bestehen jeweils aus Gummizusammensetzungen, deren Rückprallelastizität (gemäß DIN 53512, bei 70°C) sich von außen nach innen schrittweise erhöht und Werte zwischen den Rückprallelastizitäten der äußersten und innersten Schicht einnehmen. Ein erfindungsgemäß ausgeführter Laufstreifen ist daher mit zunehmendem Abrieb weitgehend unempfindlich gegenüber unregelmäßigem Abrieb und weist einen geringen Rollwiderstand auf, was für den Treibstoffverbrauch von Vorteil ist.

Die einzelnen Schichten im Laufstreifenoberteil können übereinstimmende Dicken aufweisen, es kann jedoch auch vorgesehen sein, die Schichten unterschiedlich dick auszuführen, beispielsweise derart, dass ihre Dicke von der radial äußersten bis zur radial innersten Schicht zunimmt.

Des Weiteren kann gemäß der Erfindung vorgesehen sein, dass eine oder mehrere Schicht(en) im Laufstreifenoberteil in axialer Richtung aus einer Anzahl von, insbesondere mindestens drei, in Umfangsrichtung umlaufenden Streifen zusammengesetzt ist bzw. sind. Die Streifen können übereinstimmende oder unterschiedliche Breiten aufweisen, wobei in einer Schicht zumindest ein Streifen aus einer Gummizusammensetzung besteht, deren Rückprallelastizität (bei 70°C) entsprechend der Erfindung eingestellt ist.

Weitere Merkmale, Vorteile und Einzelheiten der Erfindung werden nun anhand der Zeichnung, die schematisch zwei Ausführungsbeispiele darstellt, näher beschrieben. Dabei zeigen
Fig. 1 eine Ausführungsform der Erfindung anhand eines Querschnittes durch einen Fahrzeugluftreifen im Bereich des Laufstreifens und
Fig. 2 eine weitere Ausführungsform der Erfindung ebenfalls anhand eines Querschnittes durch einen Fahrzeugluftreifen im Bereich des Laufstreifens.

Die beiden Zeichnungsfiguren zeigen vereinfachte Querschnitte durch die Laufstreifenbereiche von Luftreifen für Nutzfahrzeuge, wobei von den üblichen Bauteilen des Reifens ein Laufstreifen 1, ein Gürtel 2 bestehend aus vier Gürtellagen mit in Gummi eingebetteten, vorzugsweise aus Stahlkord bestehenden Festigkeitsträgern, und eine ebenfalls mit Festigkeitsträgern verstärkte Radialkarkasse 3 dargestellt sind. Von den Seitenwänden 7 des Reifens sind lediglich die radial äußeren Endabschnitte gezeigt. Nicht dargestellt sind Wulstbereiche mit Wulstkernen, Kernprofilen und sonstigen Wulstbauteilen.

Der Laufstreifen 1 ist in bekannter Weise in einen Laufstreifenoberteil 4 und einen Laufstreifenunterteil 5 geteilt. Der Laufstreifenunterteil 5 weist eine im Wesentlichen konstante Stärke in der Größenordnung von 2 mm bis 3 mm auf und besteht insbesondere aus einer der für Laufstreifenunterteile von Nutzfahrzeugreifen üblichen Gummizusammensetzungen. Der Laufstreifenoberteil 4 ist jener Teil des Laufstreifens 1, welcher mit einer in den Figuren nicht gezeigten Profilierung aus Umfangsnuten, Quernuten, Einschnitten und dergleichen versehen ist.

Gemäß der Erfindung besteht der Laufstreifenoberteil 4 aus zumindest zwei, insbesondere aus bis zu fünf, übereinander angeordneten, vorzugsweise übereinstimmend dicken Schichten 4a, 4b. Sind zwei Schichten 4a, 4b vorgesehen, weisen diese eine übereinstimmende Dicke in der Größenordung von 5 mm bis 12 mm auf. Die Gummizusammensetzungen der einzelnen Schichten 4a, 4b unterscheiden sich in ihrem Dämpfungs- bzw. Rückprallverhalten. Die am Weitesten radial außen befmdliche Schicht 4a weist die geringste Rückprallelastizität auf, in jeder Schicht, die in radialer Richtung und in Richtung Reifeninneres vorgesehen ist, ist die Rückprallelastizität höher. In der radial äußersten Schicht 4a beträgt die Rückprallelastizität bei 70°C (ermittelt gemäß DIN 53512) von 40% bis 60% in der radial innersten Schicht 4b des Laufstreifenoberteils 4 beträgt die Rückprallelastizität von 50% bis 70%.

Ein erfindungsgemäß ausgeführter Reifen weist einen Laufstreifen 1 auf, welcher im Neuzustand gegenüber unregelmäßigem Abrieb kaum anfällig ist. Mit der sich durch Laufstreifenabrieb verringernden Profiltiefe nimmt in Folge der höheren Rückprallelastizität in den radial inneren Schichten des Laufstreifenoberteils 4 die Beständigkeit gegenüber unregelmäßigem Abrieb ab. Da jedoch mit abnehmender Profiltiefe auch die Profilverformung geringer wird, können sich die beiden Effekte - Zunahme der Anfälligkeit des Laufstreifens gegenüber unregelmäßigem Abrieb durch die höhere Rückprallelastizität einerseits und Reduktion der Anfälligkeit des Laufstreifens gegenüber unregelmäßigem Abrieb mit sich verringernder Profiltiefe andererseits - ausgleichen.

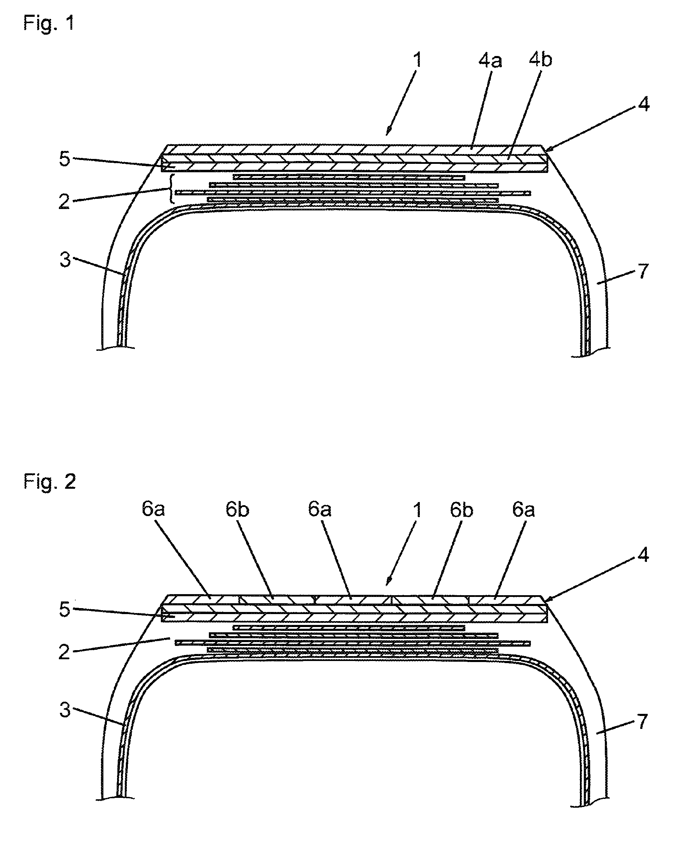

Bei der in Fig. 2 gezeigten Ausführungsform ist die radial äußere Schicht 4a des Laufstreifenoberteils 4 in axialer Richtung in eine Anzahl von Streifen 6a, 6b unterteilt, die in Reifenumfangsrichtung verlaufen. Bei der gezeigten Ausführungsvariante sind insgesamt fünf gleich breit angeführte Streifen 6a, 6b vorgesehen. Die drei Streifen 6a sind abwechselnd mit zwei Streifen 6b angeordnet. Die drei Streifen 6a sind beispielsweise jene, die gemäß der Erfindung aus einer Gummizusammensetzung bestehen, welche die geringste Rückprallelastizität aufweist. Die Streifen 6b können eine Rückprallelastizität aufweisen, die etwas höher ist und insbesondere jener der darunter befindlichen Schicht 4b entspricht.

Die Rückprallelastizität der einzelnen für die Schichten 4a, 4b verwendeten Kautschukmischungen kann, wie es dem Fachmann bekannt ist, durch die Auswahl und den Anteil entsprechender Kautschuktypen bzw. Kautschukverschnitte, durch die Auswahl und den Anteil von Füllstoffen bzw. Füllstofftypen und durch den Grad der Vernetzung eingestellt werden. Die Kautschukmischung mit der geringsten Rückprallelastizität enthält beispielsweise Ruß in einem Anteil von 50 phr, jene mit der größten Rückprallelastizität Ruß in einem Anteil von 40 phr. Zu den weiteren Bestandteilen der Mischungen gehören die üblichen Zusatzstoffe, wie Zinkoxid, Schwefel, Beschleuniger, Verarbeitungshilfsmittel und Alterungsschutzmittel. Ihre Anteile können den für Mischungen in Laufstreifen für Fahrzeugluftreifen üblichen Anteilen entsprechen.

### Bezugsziffernliste

- 1: Laufstreifen
- 2: Gürtel
- 3: Radialkarkasse
- 4: Laufstreifenoberteil
- 4a: Schicht
- 4b: Schicht
- 5: Laufstreifenunterteil
- 6a: Streifen
- 6b: Streifen
- 7: Seitenwand

## Patentansprüche

1. Fahrzeugluftreifen für Nutzfahrzeuge mit einer Radialkarkasse, einem mehrlagigen Gürtel und einem Laufstreifen (1) aus einem Laufstreifenunterteil (5) und einem profilierten Laufstreifenoberteil (4), welcher aus mehreren in radialer Richtung aufeinander angeordneten Schichten (4a, 4b) aus unterschiedlichen Gummizusammensetzungen besteht, welche Schichten (4a, 4b) im Laufstreifenoberteil sich in ihrer Rückprallelastizität voneinander unterscheiden, wobei die radial äußerste Schicht (4a) die geringste Rückprallelastizität aufweist und die Rückprallelastizität in der bzw. den darunter befindlichen Schicht(en) in Richtung Reifeninneres größer ist beziehungsweise sukzessive größer wird,
**dadurch gekennzeichnet,**
**dass** die radial äußerste Schicht (4a) aus einer Gummizusammensetzung besteht oder eine solche aufweist, welche eine Rückprallelastizität (gemäß DIN 53512, bei 70° C) von 40% bis 60% und die radial innerste Schicht (4b) aus einer Gummizusammensetzung besteht oder eine solche aufweist, welche eine Rückprallelastizität (gemäß DIN 53512, bis 70°C) von 50% bis 70% aufweist.

2. Fahrzeugluftreifen nach Anspruch 1, **dadurch gekennzeichnet, dass** die Schichten (4a, 4b) im Luftstreifenoberteil (4) übereinstimmende Dicken aufweisen.

3. Fahrzeugluftreifen nach Anspruch 1 oder 2, **dadurch gekennzeichnet, dass** zumindest eine der Schichten (4a, 4b) in axialer Richtung aus einer Anzahl von, insbesondere mindestens drei, in Umfangsrichtung umlaufenden Streifen (6a, 6b) besteht.

## Claims

1. Pneumatic tyre for commercial vehicles with a radial carcass, a multiple-ply belt and a tread (1) made of an underlying tread part (5) and a profiled overlying tread part (4) which is composed of a plurality of layers (4a, 4b) made of different rubber compositions and arranged on one another in radial direction, which layers (4a, 4b) within the overlying tread part differ from one another in their rebound resilience, where the layer (4a) that is radially outermost has the lowest rebound resilience and in the layer(s) located thereunder the rebound resilience is greater or becomes successively greater in the direction of the interior of the tyre,
**characterized in that**
the layer (4a) that is radially outermost is composed of, or comprises, a rubber composition which has a rebound resilience (to DIN 53512, at 70°) of from 40% to 60% and the layer (4b) that is radially innermost is composed of, or comprises, a rubber composition which has a rebound resilience (to DIN 53512, up to 70°C) of from 50% to 70%.

2. Pneumatic tyre according to Claim 1, **characterized in that** the layers (4a, 4b) in the overlying part of the tread (4) have identical thicknesses.

3. Pneumatic tyre according to Claim 1 or 2, **characterized in that** at least one of the layers (4a, 4b) is composed in axial direction of a number of, in particular at least three, strips (6a, 6b) running in circumferential direction.

## Revendications

1. Bandage pneumatique pour roue de véhicule, présentant une carcasse radiale, une ceinture en plusieurs couches et une bande de roulement (1) constituée d'une partie inférieure (5) de bande de roulement et d'une partie supérieure profilée (4) de bande de roulement constituée de plusieurs couches (4a, 4b) en compositions différentes de caoutchouc disposées les unes au-dessus des autres dans la direction radiale,
les couches (4a, 4b) différant l'une de l'autre dans leur élasticité au rebondissement, la couche radialement extérieure (4a) présentant la plus petite élasticité au rebondissement et l'élasticité au rebondissement de la ou des couches situées en dessous augmentant dans la direction de l'intérieur du bandage de roue,
**caractérisé en ce que**
la couche radialement extérieure (4a) est constituée d'une composition de caoutchouc ou présente une composition de caoutchouc dont l'élasticité au rebondissement (selon DIN 53512 et à 70°C) est de 40 à 60 % et la couche radialement intérieure (4b) est constituée d'une composition de caoutchouc ou présente une composition de caoutchouc dont l'élasticité au rebondissement (selon DIN 53512, et à 70°C) est de 50 % à 70 %.

2. Bandage pneumatique pour roue de véhicule selon la revendication 1, **caractérisé en ce que** les épaisseurs des couches (4a, 4b) se correspondent dans la partie supérieure (4) du bandage pneumatique pour roue.

3. Bandage pneumatique pour roue de véhicule selon les revendications 1 ou 2, **caractérisé en ce qu'**au moins l'une des couches (4a, 4b) est constituée dans la direction axiale de plusieurs et en particulier d'au moins trois rubans (6a, 6b) qui s'étendent dans la direction périphérique.
